# EUROPEAN PATENT SPECIFICATION

(11) **EP 3 903 512 B1**
(45) Date of publication and mention of the grant of the patent: **29.04.2026**
(21) Application number: 19701222.2
(22) Date of filing: 21.01.2019
(51) Int. Cl.: H04W 28/16, H04W 48/12, H04W 60/04

(54) **NETWORK DEVICE AND MOBILE DEVICE FOR TRANSITION AREA RECONFIGURATION**
NETZWERKVORRICHTUNG UND MOBILE VORRICHTUNG ZUR REKONFIGURIERUNG VON ÜBERGANGSBEREICHEN
DISPOSITIF DE RÉSEAU ET DISPOSITIF MOBILE POUR RECONFIGURATION DE ZONE DE TRANSITION

(43) Date of publication of application: 03.11.2021
(73) Proprietor: Huawei Technologies Co., Ltd., Longgang District, Shenzhen, Guangdong 518129 (CN)
(72) Inventor: KOUSARIDAS, Apostolos, 80992 Munich (DE); ZHOU, Chan, 80992 Munich (DE); SACRISTÁN, David, Martín, 46022 València (ES); MONSERRAT, Jose, Francisco, 611731 València (ES); SPAPIS, Panagiotis, 80992 Munich (DE)
(74) Representative: Roth, Sebastian
(86) International application number: PCT/EP2019/051368
(87) International publication number: WO 2020/151801

(56) References cited:
- EP-A1- 3 439 394
- WO-A1-2017/167287
- US-A1- 2018 124 771
- US-A1- 2018 124 771
- US-A1- 2018 242 115
- US-A1- 2018 242 115

## Description

### TECHNICAL FIELD

The present disclosure relates to the field of mobile communication, in particular vehicle to anything (V2X) and sidelink communication. The present disclosure more specifically relates to dynamic coordination among operators in agreeing on a resource distribution among them and also to a vehicular UE's notification about the new resource distribution.

### BACKGROUND

Vehicular communication is typically based on a multi-operator environment since it cannot be guaranteed that only one operator is going to coordinate vehicular interactions in an overall area.

In vehicular communications, a UE may communicate using an infrastructure network (i.e. Radio Access Network (RAN) and Core Network (CN)) or direct links (i.e. sidelink communication, supported by the RAN or autonomous). In a single operator environment the RAN and CN are controlled by one operator which simplifies the problem and facilitates the operator to proceed in optimizations. In multiple operators environments, the operators are hard to coordinate, thus making it hard to meet the stringent communication requirements of the V2X services in terms of delay (e.g. information needs to be exchanged from 5 to 100msec depending on the case) and reliability (e.g. transmission needs to be performed with 99% to 99.999% reliability, depending on the case).

Prior art solutions facilitate a transformation of the multi operator problem to a single operator one, by forcing all UEs in a certain area to roam in only one operator responsible for the resource coordination in this particular area. These type of solutions propose a static or semi-static configuration of the transition area and they fail to deal with potential required updates.

In case that several operators offer vehicular communication services, inter-operator coordination is required at least for sidelink communication, assuming that each operator will support its infrastructure based communications; the schemes that work based on the force roaming fail to deal with this approach.

The present disclosure in particular addresses regional split cases and cross border cases, as explained in the following: Direct communication among vehicles, so called Sidelink V2X communication, Direct vehicle to vehicle (V2V) communication, or PC5 communication, refer to communication among vehicles directly, without the content of the communication to go through an operators' network, radio access network or core network. Two types of direct communication have been considered in the past for vehicular communication: network assisted/controlled one and autonomous one. In the former case (also called Mode 3 in LTE) the UEs are being scheduled by the network and in the latter case (also called Mode 4 in LTE) the UEs select resources on their own, using their local view based on sensing. In this case the network may provide directions on resource use (e.g. which resources the UEs are allowed to use for transmission, in which they are allowed to receive data, which coding schemes they are permitted to use, etc.)

In a multi operator environment, operators have to coordinate about the resources to be used for delivering the V2V services and the respective configurations. The UE may acquire the V2V configurations:
- by reading the System Information Blocks (SIBs) of the non-serving operator,
- via pre-configuration,
- by Serving BS signaling (i.e., SIB from serving operator), or
- from a V2X server.

Regarding spectrum resources to be used for V2V communication, two options may be considered:
- Separate carriers are allocated for different operators for V2V services over sidelink: In this case a UE has to listen to multiple channels requiring carrier switching with interruption and delay or multiple reception chains. For avoiding the interruptions the UE has to have one reception chains (i.e. modem) for each operator. Alternatively, the operators may coordinate and use time division schemes in order to avoid half duplex and scheduling UEs at the same time.
- The same carrier is shared among different operators for V2V services over sidelink: In this case the UEs have to be reconfigured every time the spectrum configuration has been updated for the autonomous resource selection (Mode 4 in LTE) and in the case of network assisted/controlled the BSs need to know the resource pool configuration of other operators and also apply time division schemes for the avoiding overlaps of the resource allocation.

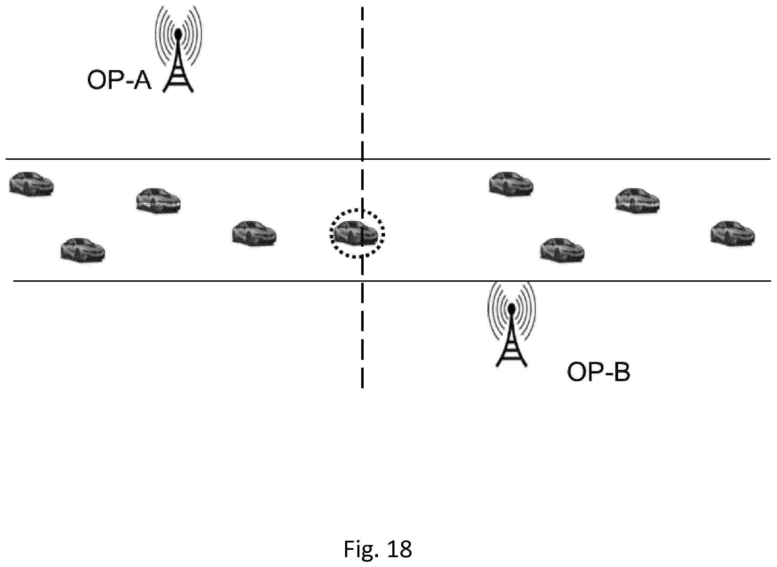

As mentioned above regional split may reduce the complexity of the multi operator problem. In this case, a geographical area is divided into disjoint areas each one served by a single operator, as e.g. shown in Fig. 18. Even in this case though, problems arise around the border area between operators. The challenges are:
- how a vehicle will be reached from vehicles attached to different operators, and
- how interference will be handled in case the same spectrum pool/resources is used.

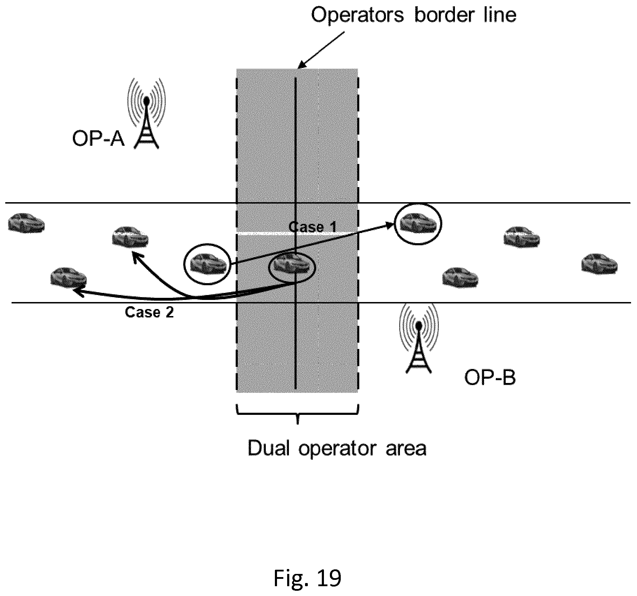

Even if a dual operator area is defined, where the UEs are configured to receive information from vehicles belonging to different operators, interference problems will still arise, as e.g. shown in Fig. 19:
- Case 1: Because of the transmission range.
- Case 2: Because the vehicles even if they change the resources that they use to new resources they will cause interference to the other vehicles.

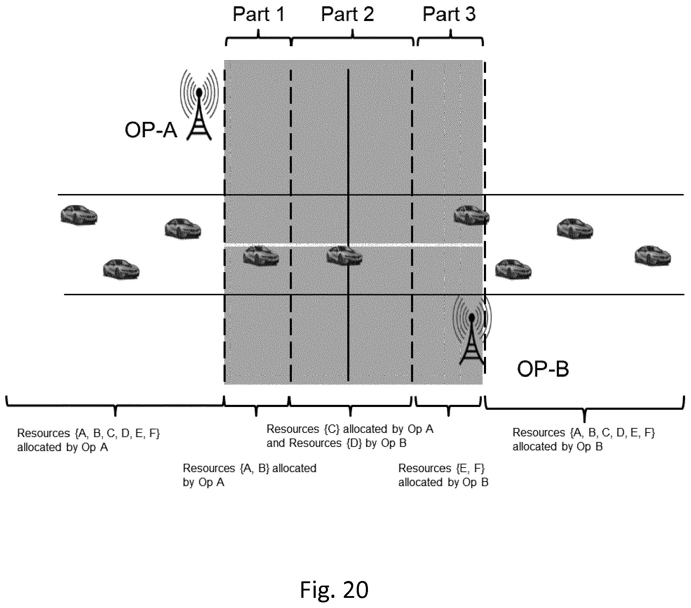

One way to handle the problem of interference in the previous multi operator scenario is to form the dual operator area (i.e. the transition area) in such way so as to orthogonalize the used resources in some parts of the dual operator area. One exemplary implementation of such scheme is presented in Fig. 20. Assuming that all the available spectrum resources are comprising six separate spectrum chunks (A, B, C, D, E, F) in each single operator area all the resources can be used. In the dual operator area one scheme to orthogonalize the resources could be the following:
- In Part 1: operator A schedules resources A and B
- In Part 2: operator A schedules resources C and operator B schedules resources D
- In Part 3: operator B schedules resources E and F

The three parts described above in particular can be called transition area.

The vehicles switch from one operator to the other by a local decision, by indication from the operator, by joint decision with the vehicles that they have a communication session, or by other ways. The common area (Part 2 in Fig. 20 is scheduled by both operators and is the area where the vehicles are switching from the one operator to the other).

This scheme manages to handle the interference from the one operator to the other, and deals with the half duplex problem since the two operators properly coordinate. Finally, one modem - with same/global (e.g. GLONASS/GPS) synchronization manages to deal with the communication between the two operators.

The challenge that such approach faces is that in case that updates are required (in case of e.g. traffic jams or failures in the dual operator area, which would result in resource management problems, resource shortage, etc.) the configuration of the multi operator zone (i.e. the transition area) has to be updated, in particular in a network device and in a mobile device.

US 2018/0124771 A1 discloses a method for supporting a vehicle communication (connected car or vehicle to everything (V2X)) service in a wireless communication system and an apparatus thereof. The method includes receiving threshold information for reporting a channel busy ratio (CBR), measuring the CBR for a resource pool, identifying whether a reporting condition is satisfied by comparing the measured CBR with the threshold information, and reporting the measured CBR if the reporting condition is satisfied.

US 2018/0242115 A1 discloses a method for transmitting and receiving a vehicle to everything (V2X) message of a first road side unit (RSU) in a wireless communication system, the method comprising the steps of transmitting, to an ITS server, information associated with PC5 interface congestion; after transmitting the information associated with PC5 interface congestion, receiving a first V2X message; and broadcasting a second V2X message on the basis of the first V2X message, wherein the second V2X message indicates that the second V2X message is control information via a packet data convergence protocol (PDCP) service data unit.

### SUMMARY

In view of the above-mentioned problems and disadvantages, the present disclosure aims to improve the conventional network device and mobile device. The present disclosure in particular enables to handle the coordination among operators in a transition area, e.g. in case of force roaming or regional split solutions. In case of schemes where several operators cover an overall area, the present disclosure can be applied for facilitating the operators' coordination. This is in particular the case if the transition area is infinitely large.

In other words, the present disclosure allows for:
- coordination of operators regarding used resources and the respective signaling, and
- notification of UEs about the updates in the considered resources.

That is, the present disclosure allows for determining a demand for resource reconfiguration (e.g. of an operator, or of a UE) in a transition area, and for providing information how to reconfigure the resources (e.g. resource provided by an operator, or used by a UE) available in the transition area.

The object of the present disclosure is achieved by the subject-matter of the independent claims. Additional features of the invention are provided in the dependent claims. In the following, parts of the description and drawings referring to embodiments which are not covered by the claims are not presented as embodiments of the invention, but as examples useful for understanding the invention.

A first aspect of the present disclosure provides a method for sidelink communication according to claim 1, including: obtaining a transition area reconfiguration demand, TARD, information, and providing a transition area reconfiguration, TAR, information based on the TARD information. The transition area is an area in which at least two operators are available for configuration of communication resources. The TARD information is information which indicates that a reconfiguration of resources or parameters relating to the transition area is required, and the TAR information indicates how a reconfiguration of the transition area is to be performed.

This ensures that a demand for reconfiguration of resources or parameters relating to a transition area can be determined, and that the resources and parameters can be effectively adjusted.

In particular, the TAR information can be provided to a base station, or to a mobile device. In both cases, the TAR information can be provided directly, or indirectly. In particular, the base station can forward the TAR information to the mobile device.

The above functions and servers are not restricted to 4G or 5G, only because the naming is similar or the same. In particular, the above functions and servers can relate to any kind of mobile communication technology.

In a further implementation form of the first aspect, the method includes providing the TAR information by means of a broadcast message; radio control signaling; application layer information; and/or non-access stratum signaling.

This ensures that the network device according to the first aspect can efficiently make use of several already present ways for signaling information.

In particular, the broadcast message can comprise a system information block, SIB, message. In particular, the radio control signaling can comprise radio resource control signaling. In particular, the non access stratum signaling can comprise a tracking area update.

In a further implementation form of the first aspect, the method further includes determining a demand for reconfiguration of a transition area, and to obtain the TARD information based on the demand.

This ensures, that the network device not only can obtain information regarding a desired reconfiguration, but also determine the demand itself.

In a further implementation form of the first aspect, the method further includes providing a TAR request, based on the TARD information, obtaining a TAR response, according to the TAR request, and providing the TAR information based on the TAR response.

This ensures that the network device is not restricted to determining the TAR information on its own, but also can communicate with a second network device (preferably located at a second network operator) to agree on a reconfiguration and provide TAR information accordingly.

In a further implementation form of the first aspect, the TAR request is based on and/or comprises at least one of: packet error rate; channel busy rate, CBR; base station, BS, failure indication; latency; bit error rate; data rate.

In a further implementation form of the first aspect, the TAR request includes a reconfiguration parameter.

In particular, the reconfiguration parameter can be at least one of a transition area configuration type, a resource allocation configuration, a transition area location configuration, or a transition area border configuration.

A second aspect of the present disclosure provides a method for sidelink communication including supporting another network device in providing a transition area reconfiguration, TAR, information based on a transition area reconfiguration demand, TARD, information. A transition area is an area in which at least two operators are available for configuration of communication resources. The TARD information is information which indicates that a reconfiguration of resources or parameters relating to the transition area is required, and wherein the TAR information indicates how a reconfiguration of the transition area is to be performed.

This ensures that several network device can communicate with each other and can agree on TAR information according to which resources and parameters in a transition area are going to be reconfigured. Thereby, several network operators which use such network devices can reconfigure the transition area in a joint manner.

In an implementation form of the second aspect, the method further includes obtaining a TAR request; determining a TAR response based on the TAR request; and providing the TAR response, to support the other network device.

The TAR request that the network device of the second aspect receives is the TAR request that is sent by the network device for the first aspect. The TAR response that the network device of the second aspect sends is the TAR response that the network device first aspect receives.

In a further implementation form of the second aspect, the TAR request is based on and/or comprises at least one of a packet error rate; a channel busy rate, CBR; a base station, BS, failure indication; a latency; a bit error rate; or a data rate; and the method further includes determining the TAR response based on at least one of the packet error rate; the channel busy rate, CBR; the base station, BS, failure indication; the latency; the bit error rate; or the data rate.

In a further implementation form of the second aspect, the TAR request includes a reconfiguration parameter, and wherein the network device is further configured to determine the TAR response based on the reconfiguration parameter.

In particular, the reconfiguration parameter includes at least one of a transition area configuration type, a resource allocation configuration, a transition area location configuration, or a transition area border information.

A third aspect of the present disclosure provides a method for a mobile device, including obtainin a transition area reconfiguration, TAR, information: and adjusting a transition area configuration of the mobile device according to the TAR information. A transition area is an area in which at least two operators are available for configuration of communication resources, and wherein the TAR information indicates how a reconfiguration of the transition area is to be performed.

This ensures that the mobile device of the third aspect can be reconfigured according to the TAR information which is determined by means of the network device according to the first aspect, wherein the network device of the first aspect can be supported by the network device of the second aspect.

In an implementation form of the third aspect, the method further includes obtaining the TAR information by means of a broadcast message; radio control signaling; application layer information; and/or non-access stratum signaling.

In particular, the broadcast message can comprise a system information block, SIB, message. In particular, the radio control signaling can comprise radio resource control signaling. In particular, the non access stratum signaling can comprise a tracking area update.

A fourth aspect of the present disclosure provides a network device for sidelink communication, configured to perform the method according to the first aspect, or perform the method according to second aspect.

A fifth aspect of the present disclosure provides a mobile device, configured to perform the method according to the third aspect.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present disclosure will be explained in the following description of specific embodiments in relation to the enclosed drawings, in which
- FIG. 1: shows a schematic view of a network device according to an embodiment of the present disclosure.
- FIG. 2: shows a schematic view of a network device according to an embodiment of the present disclosure in more detail.
- FIG. 3: shows a schematic view of a network device according to another embodiment of the present disclosure.
- FIG. 4: shows a schematic view of a network device according to an embodiment of the present disclosure in more detail.
- FIG. 5: shows an operating principle of network devices according to the present disclosure.
- FIG. 6: shows an operating principle of network devices according to the present disclosure.
- FIG. 7: shows an operating principle of network devices according to the present disclosure.
- FIG. 8: shows an operating principle of network devices according to the present disclosure.
- FIG. 9: shows an operating principle of network devices according to the present disclosure.
- FIG. 10: shows a schematic view of information signaling according to the present disclosure.
- FIG. 11: shows a schematic view of a mobile device according to an embodiment of the present disclosure.
- FIG. 12: shows a schematic view of information signaling according to the present disclosure.
- FIG. 13: shows a schematic view of information signaling according to the present disclosure.
- FIG. 14: shows a schematic view of information signaling according to the present disclosure.
- FIG. 15: shows a schematic view of a method according to an embodiment of the present disclosure.
- FIG. 16: shows a schematic view of a method according to an embodiment of the present disclosure.
- FIG. 17: shows a schematic view of a method according to an embodiment of the present disclosure.
- FIG. 18: shows a schematic view of a transition area according to the prior art.
- FIG. 19: shows a schematic view of a transition area according to the prior art.
- FIG. 20: shows a schematic view of a transition area according to the prior art.

### DETAILED DESCRIPTION OF EMBODIMENTS

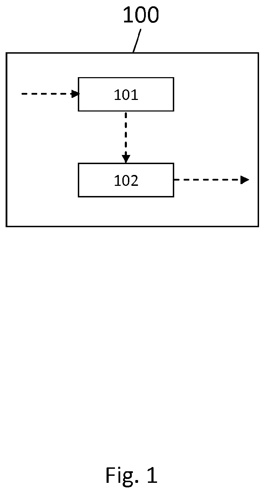

FIG. 1 shows a schematic view of a network device 100 according to an embodiment of the present disclosure. The network device 100 can in particular be an operator device or an operator-independent device, and is preferably suitable for sidelink communication.

To allow for reconfiguration of a transition area, the device 100 is configured to obtain a transition area reconfiguration demand, TARD, information 101. In particular, this can be information which indicates that reconfiguration of resources or parameters relating to the transition area is required, e.g. required by a UE or a network operator. Obtaining the TARD information 101 e.g. includes determining the TARD information 101 in the device 100, or receiving the TARD information 101 by the device 100.

The device 100 is further configured to provide a transition area reconfiguration, TAR, information 102 based on the TARD information 101. The TAR information 102 can e.g. be provided to a base station and/or a UE. The base station and/or the UE are then reconfigured according to the TAR information 102 accordingly. The base station can also for war the TAR information 102 to the UE. The TAR information 102 in particular indicates how a reconfiguration of the transition area is to be performed.

The network device 100 preferably is operated by a first network operator, and can communicate with (and be supported by) another network device, e.g. the network device 300 (which is going to be described below), which can be operated by another network operator.

Optionally, the network device 100 can be implemented by means of an Access and Mobility Management function, AMF; a Management server; an Application Function. AF, or Vehicle to Anything, V2X, control server; or an Application Layer Protocol. The network device 100 is however not restricted to such implementation manners. In particular, the above-mentioned functions and server do not only relate to 4G or 5G, but can relate to any mobile communication means.

Further optionally, the network device 100 can provide the TAR information 102 by means of a broadcast message; radio control signaling; application layer information; and/or non-access stratum signaling.

Further optionally, the network device 100 can determine a demand for reconfiguration of a transition area, and obtain the TARD information 101 based on the demand. That is, the TARD information 101 is determined in the network device 100 itself, and does not need to be provided externally to the network device 100.

Further optionally, the transition area can be an area in which at least two operators are available, in particular for configuration of communication resources, in particular for roaming between said at least two operators.

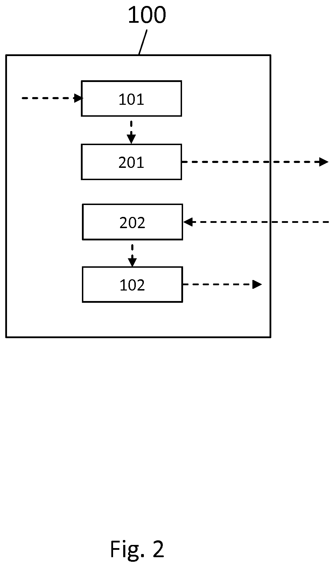

FIG. 2 shows a schematic view of a network device 100 according to an embodiment of the present disclosure in more detail. The network device 100 of FIG. 2 builds on the network device 100 of FIG. 1 and therefore includes all of its features and functions.

As it is illustrated in FIG. 2, the network device 100 optionally can provide a TAR request 201, based on the TARD information 101; obtain a TAR response 202, according to the TAR request 201, and provide the TAR information 102 based on the TAR response 202. E.g. the TAR request 201 can be provided to the network device 300, which is going to be described below, and the TAR response 202 can be received from the network device 300. Thereby, the network device 300 can support network device 100 in determining the TAR information 102.

Further optionally, the TAR request 201 can be based on and/or comprises at least one of a packet error rate; a channel busy rate, CBR; a base station, BS, failure indication; a latency; a bit error rate; a data rate. In other words, the TAR request 201 optionally indicates a cause of the request.

Further optionally, the TAR request 201 can include a reconfiguration parameter. The reconfiguration parameter e.g. suggests a newly desired transition area configuration.

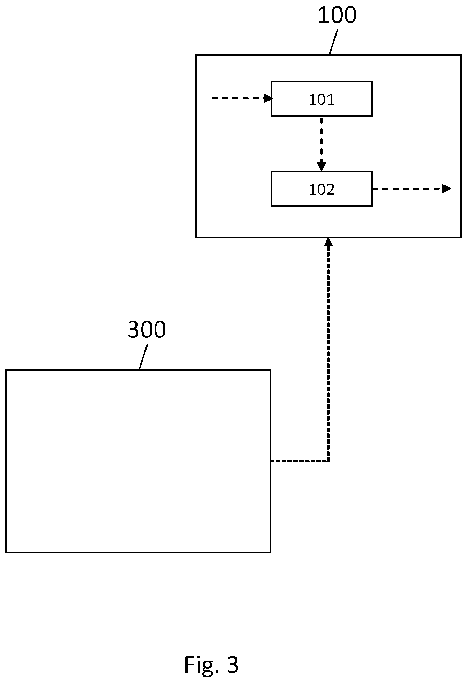

FIG. 3 shows a schematic view of a network device 300 according to another embodiment of the present disclosure. The network device 300 may be a network device corresponding to the network device 100. The network device 300, in particular can be an operator device or an operator-independent device. Further optionally, the network device 300 is suitable for sidelink communication.

The network device 300 supports the network device 100 (as e.g. shown in FIG. 1) in providing a transition area reconfiguration, TAR, information 102 based on a transition area reconfiguration demand, TARD, information 101. This is illustrated in FIG. 3 schematically by the dotted arrow.

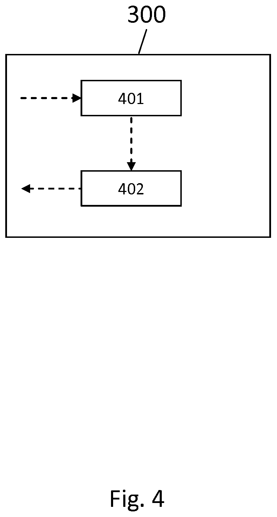

FIG. 4 shows a schematic view of the network device 300 according to an embodiment of the present disclosure in more detail. The network device 300 of FIG. 4 builds on the network device 300 of FIG. 3 and therefore includes all its functions and features.

As illustrated in FIG. 4, the network device 300 further can obtain a TAR request 401; determine a TAR response 402 based on the TAR request 401; and provide the TAR response 402. Thereby, the device 300 supports the other network device 100.

Thereby, two operators, one of which is operating the network device 100, and the other one of which is operating the network device 300, can jointly agree on a transition area reconfiguration, by means of the TAR request 401 and the TAR response 402. E.g. the network device 100 suggests a new configuration, and the network device 300 accepts the new configuration or makes a counter proposal.

In particular, the TAR request 401 which is received by the device 300 is the TAR request 201 which is sent by the network device 100. In particular, the TAR response 402 sent by the network device 300 is the TAR response 201 which is received by the device 100.

Further optionally, the TAR request 401 is based on and/or comprises at least one of a packet error rate; a channel busy rate, CBR; a base station, BS, failure indication; a latency; a bit error rate; or a data rate. Thus, the network device 300 optionally can determine the TAR response 402 based on at least one of the packet error rate; the channel busy rate, CBR; the base station, BS, failure indication; the latency; the bit error rate; or the data rate.

Further optionally, the TAR request 401 includes a reconfiguration parameter. Thus, the network device 300 optionally can determine the TAR response 402 based on the reconfiguration parameter.

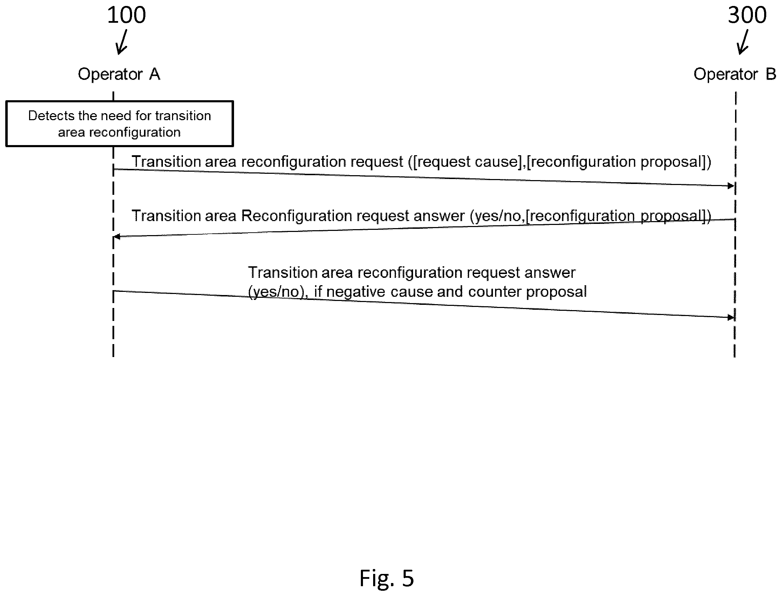

In view of FIG. 5 to FIG. 9, inter-operator coordination for transition area reconfiguration is going to be discussed.

FIG. 5 illustrates interactions between two operators for agreeing on a spectrum allocation/configuration in a dual operator area (i.e. the transition area) and the ones in the sides - with restricted resources. The interactions may be direct, as shown in the figure, or indirect, via an intermediate entity such as a server belonging to a service provider, a regulator, or any other entity with the respective authority.

In FIG. 5, operator "A" implements the network device 100, and operator "B" implements the network device 300.

In at least one operator, a functional entity has to be in charge of detecting the need for a reconfiguration of the transition area. The interactions among the two entities could be summarized in:
- interactions between the network operators to request a reconfiguration with a possible indication of the request cause (e.g. Channel Busy Ratio (CBR) measurement, BS failure, etc.), and a configuration proposal, and/or
- interactions between the network operators to notify the acceptance of the change or propose alternative solution.

The configuration proposal could be:
- the type of reconfiguration proposed (change of resource allocation or change of Transition Area location), and/or
- the details of the new configuration (new resource split, change of Transition Area location, the definition of the new border lines, etc.)

Inter-operator coordination may take place using:
- a Mobility sever in the network core (such as the Access and Mobility Management function (AMF)) which knows the position of the UEs. Then it can decide the resource pools for the involved BS and notify them dynamically;
- an Application Function or a (V2X) Control Server (such as the V2X Control Function in the 5G core);
- a Network Management Entity in the Network Management (NM) system of the operator;
- an Application layer protocol can be in charge of the configuration.

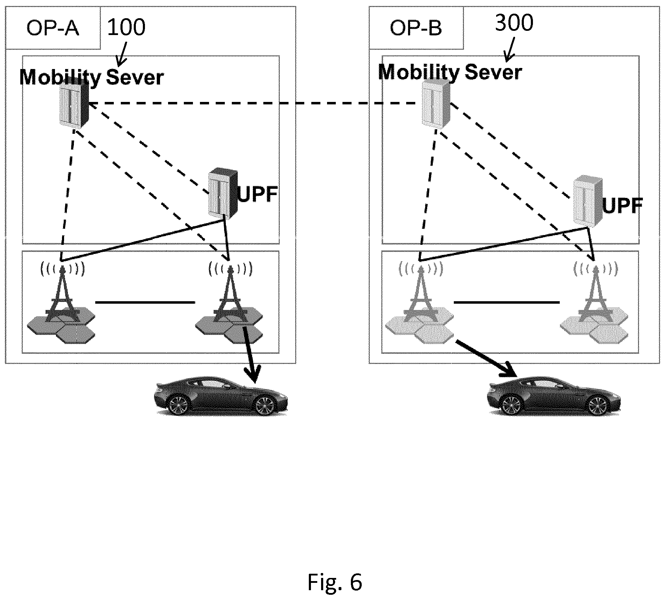

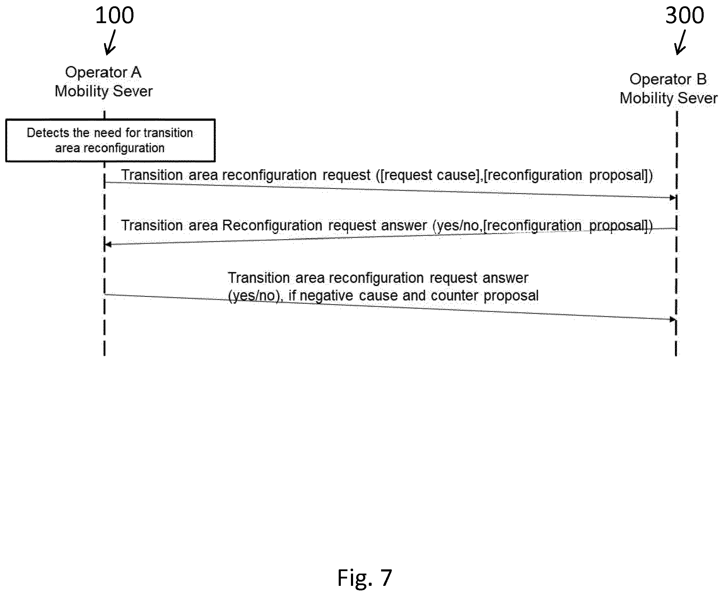

In view of FIG. 6 and FIG. 7, inter-operator coordination for transition area reconfiguration using mobility servers is going to be discussed.

In the illustrated case, Mobility Servers of two operators communicate in order to transmit a:
- Transition area reconfiguration request
- Transition area Reconfiguration response

FIG. 6 shows a simplified network topology (comprising BS, User Plane Functions - UPF, etc.) of an exemplary implementation, where mobility servers of the two operators (OP-A and OP-B) are directly connected. Other alternative implementations with indirect communication may be applied. In FIG. 6, OP-A implements the network device 100, while OP-B implements the network device 300.

FIG. 7 shows the message exchange between the two Mobility Servers. The communication may be direct or through intermediate gateways. One alternative implementation is to use exposure functions such as the Network Exposure Function of 5G. In this case the mobility server should be connected to the exposure function of the other operator to provide requests. In alternative implementations the requests could be provided to the local exposure function and the other operator may retrieve it using pull model.

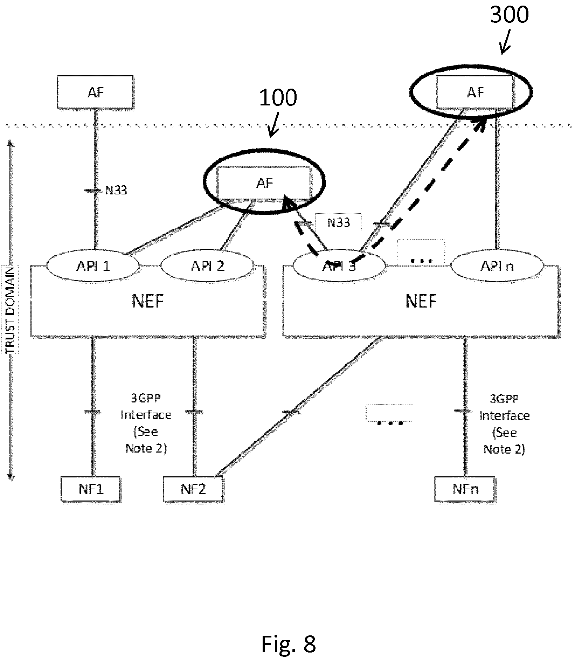

In view of FIG. 8, inter-operator coordination using an Application Function or a V2X Control Function is discussed.

A similar implementation like the one implemented above using the Mobility Server can be applied in cases where the responsible entity for the spectrum coordination is performed via an Application Function or a V2X Control Function. The application functions or V2X Control Function can be from a trust domain or not. Those from not trust domain, require an interface with the Network Exposure Function (NEF) to send/receive information to/from NFs as shown in FIG. 8. Those from trust domain may interface with the NEF or communicate directly with NFs. Again push or pull models may be implemented for these interactions between the application functions or the V2X Control Functions and the NEF functions. FIG. 8 shows an exemplary implementation between application functions belonging to different operator networks. In FIG. 8, the network device 100 is implemented by the left-hand AF, while the network device 300 is implemented by the right-hand AF.

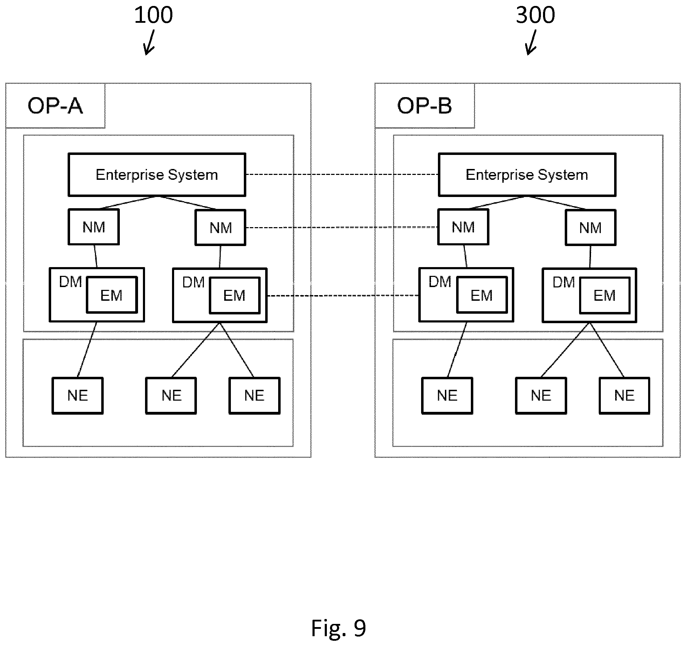

FIG. 9 illustrates inter-operator coordination using Network Management.

As shown in FIG. 9, alternative implementations use a network management system to perform coordination of spectrum resources between operators. FIG. 9 shows an exemplary implementation of such a system. Spectrum resource coordination between operators using this approach may be performed using the interface between the Network Manager (NM) or between the Domain Manager (DM). Then the NM will provide the respective configuration to the DM and these will forward the configuration to the Network Elements (NE). Again, in FIG. 9, the network device 100 is run by OP-A, while the network device 300 is run by OP-B.

In an alternative embodiment, which is not shown in the figures, inter-operator coordination using an Application Layer Protocol is addressed:
Network entities may receive their configuration using an Application Layer Protocol.

This may be implemented as follows:
- a node is switched on, with a pre-configuration file with the address of the application server,
- the node registers to the server and requests for a configuration file,
- the server sends the configuration template the node has to apply, and
- the server can update this configuration, provided that the node is registered.

Further, other approaches using online implementations and configurations may be applied.

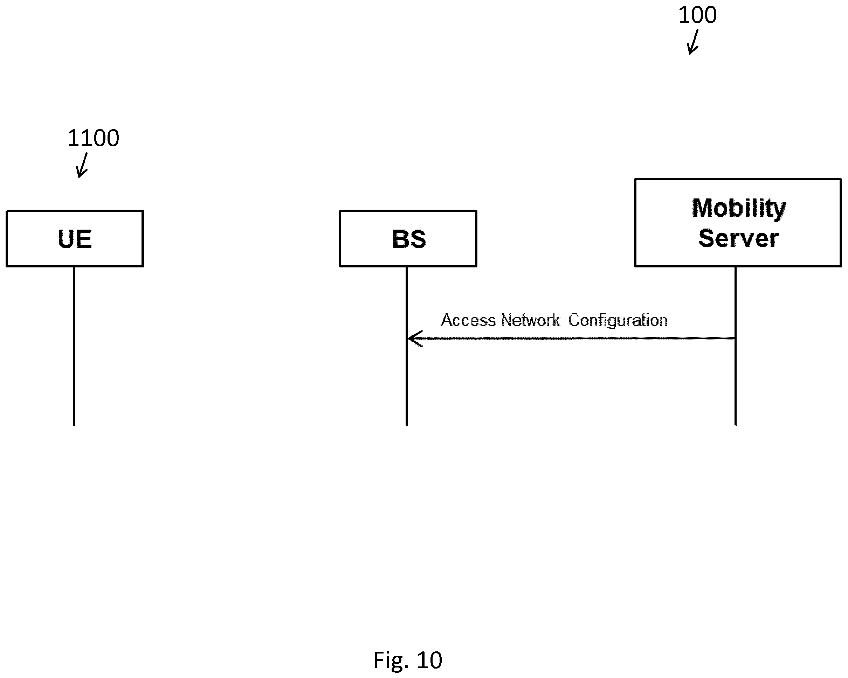

In view of FIG. 10, information transfer from a network device to the RAN is discussed.

The information for BS or UE configuration can be transferred to a network entity that has the spectrum configuration to the respective Access Network elements. The information may be available to the Mobility Server (e.g. MME in LTE networks or AMF in 5G networks) or any other logically centralized entity. In case the negotiation is performed via the V2X Control Function, V2X Application Server, or via the Management System, the information can be transferred to the Mobility Server using dedicated signaling.

FIG. 10 presents the information transfer regarding the transition area configuration from the Mobility Server to the BS. In 5G networks this information could be transferred using already available messages such as the Downlink RAN Configuration Transfer message. That is, in FIG. 10, the network device 100 is implemented by the mobility server.

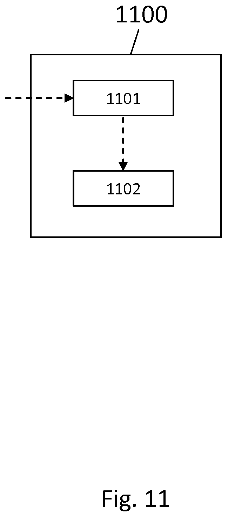

FIG. 11 shows a mobile device 1100 according to an embodiment of the present disclosure. The mobile device 1100 obtains a transition area reconfiguration, TAR, information 1101. The TAR information 1101 received by the mobile device 1101 e.g. is the TAR information 102 that is provided by the network device 100. To allow for transition area reconfiguration, the mobile device 1100 adjusts a transition area configuration 1102 of the mobile device 1100 according to the TAR information 1102.

Optionally, the mobile device 1100 can obtain the TAR information 1101 by means of a broadcast message; radio control signaling; application layer information; and/or non-access stratum signaling, as it is discussed in the following. In these cases, the TAR information 1101 is e.g. provided by the network device 100 (i.e. the TAR information 1101 is the TAR information 102).

The mobile device 1100 can also be called UE in the following.

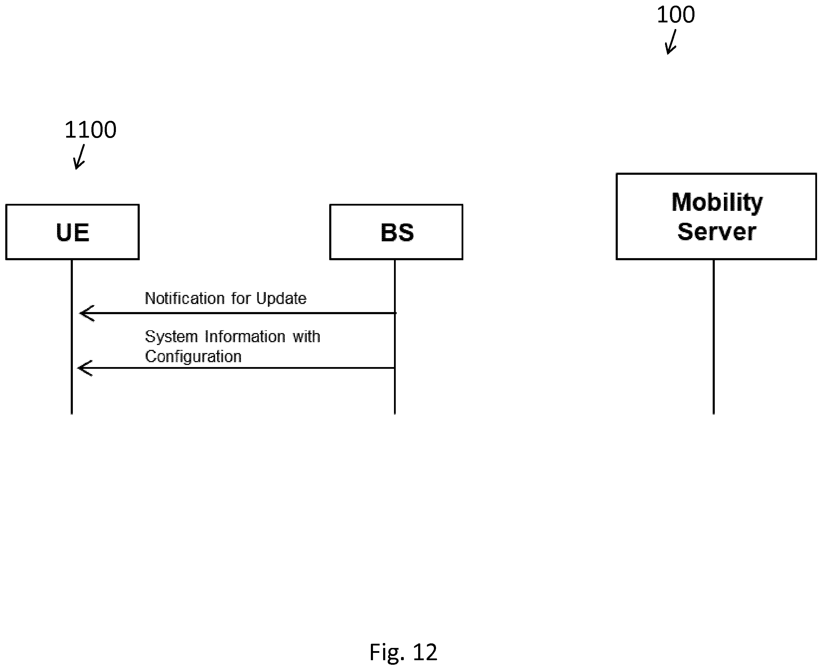

In view of FIG. 12 to 14, signaling used for UE notification by means of the network device 100 is discussed. The UEs may be notified for a certain reconfiguration in the spectrum configuration by the following alternatives.

FIG. 12 shows UE notification using system information broadcast messages.

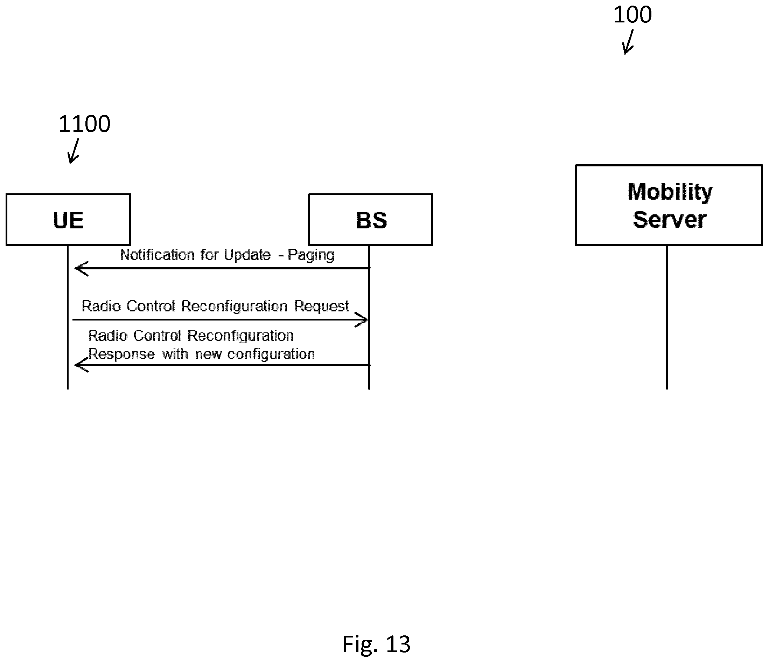

A UE may be notified for a certain reconfiguration in the spectrum configuration using system information broadcast messages. Since the transition area configuration is the same for all the UEs in a certain geographical zone, this configuration could be a broadcast message. Such message could be the broadcasting of system information (such as the System Information in the LTE systems via the System Information Blocks - SIBs). For such a case, the information may be in generic broadcast messages or in broadcast messages that the UEs should be notified to listen to. In the second case (FIG. 13) the UE should be notified by an incoming notification message (such as the RAN paging or typical paging message in LTE, and other previous cellular generations). Then the UE listens by synchronizing to the respective channels to the broadcast message with the system information. In FIG. 12, the mobility server implements the network device 100.

FIG. 13 shows UE Notification using Radio Control Signaling.

As shown in FIG. 13, a UE may be notified for a certain reconfiguration in the spectrum configuration using Radio Control signaling (such as the Radio Resource Control in LTE). In this case, once a UE enters a transition area, it will receive a notification message by the BS (such as the RAN paging message in LTE). Then the UE will send a Radio Control Reconfiguration Request and the BS will provide a Radio Control Reconfiguration Response with the respective reconfiguration. The overall procedure is provided in FIG. 13. In FIG. 13, the mobility server implements the network device 100.

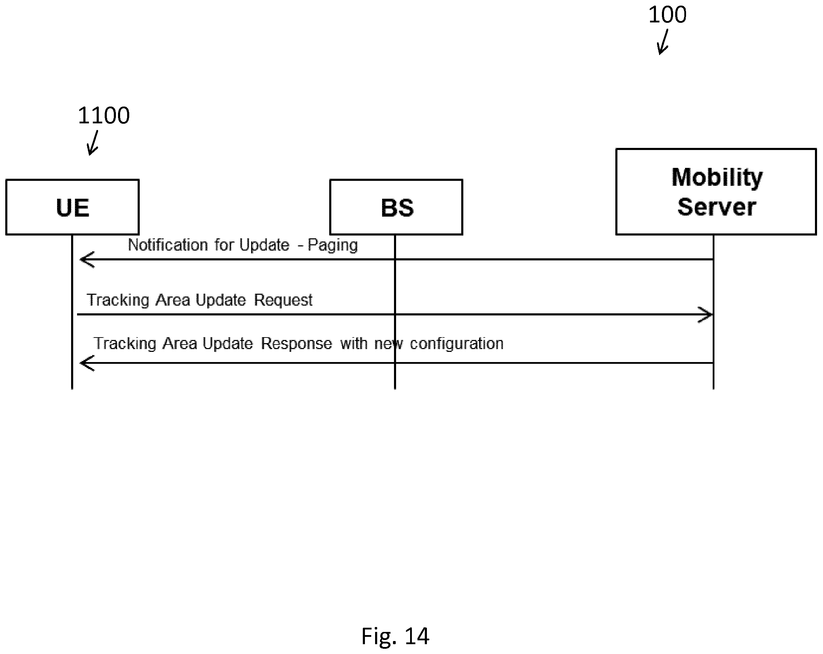

FIG. 14 shows UE Notification using non access stratum signaling.

As shown in FIG. 14, a UE may be notified for a certain reconfiguration in the spectrum configuration using non access stratum signaling (such as the Tracking Area Update in LTE). In this case, once a UE enters a transition area, it will receive a notification message by the Mobility Server (such as the paging message in LTE from the Mobility Management Server). Then the UE will send a Tracking Area Update Request to the Mobility Server and the latter will provide with a Tracking Area Update Response the respective reconfiguration. The overall procedure is provided in FIG. 14. The same procedure may be applied without applying the Tracking Area Update procedure but by using dedicated signaling. In FIG. 14, the mobility server implements the network device 100.

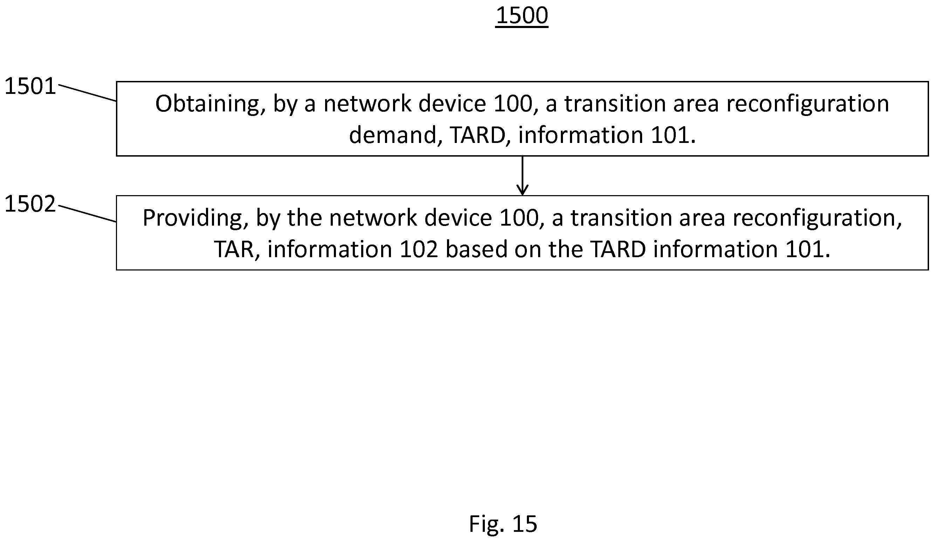

FIG. 15 shows a schematic view of a method 1500 according to an embodiment of the present disclosure. The method 1500 is for the network device 100 and comprises a first step of obtaining 1501, by the network device 100, a transition area reconfiguration demand, TARD, information 101. The method 1500 also comprises a step of providing 1502, by the network device 100, a transition area reconfiguration, TAR, information 102 based on the TARD information 101.

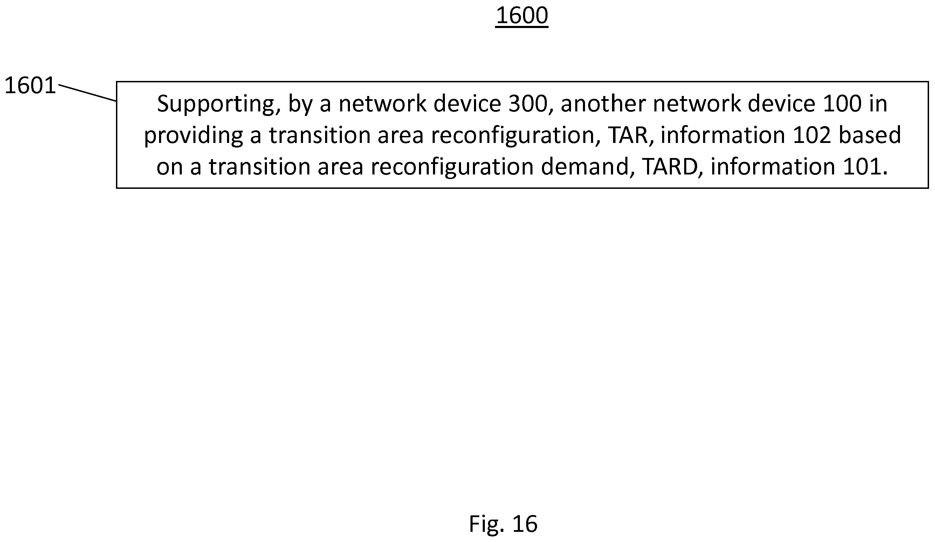

FIG. 16 shows a schematic view of a method 1600 according to an embodiment of the present disclosure. The method 1600 is for the network device 300, and comprises a first step of supporting 1601, by the network device 300, another network device 100 in providing a transition area reconfiguration, TAR, information 102 based on a transition area reconfiguration demand, TARD, information 101. The another network device 100 is the network device 100 as described in FIG. 1 above.

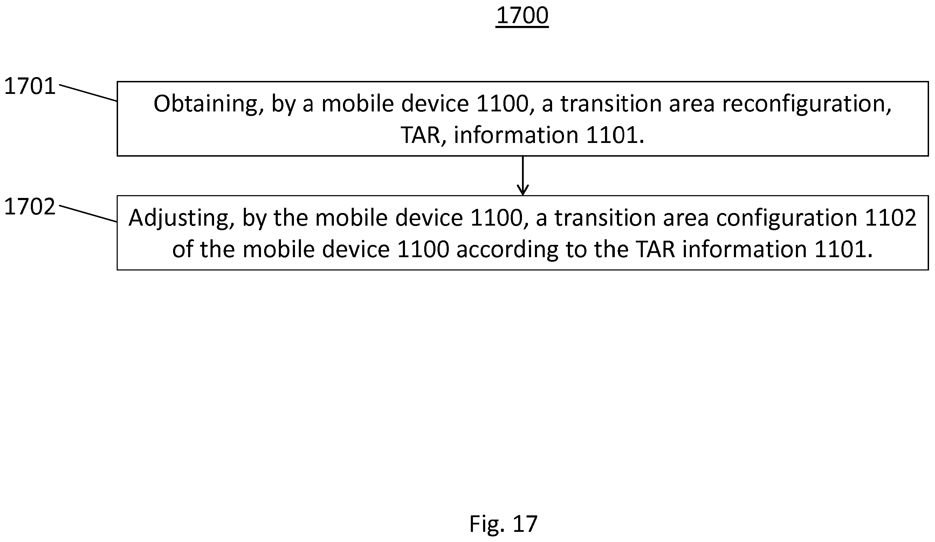

FIG. 17 shows a schematic view of a method 1700 according to an embodiment of the present disclosure. The method 1700 is for the mobile device 1100 and comprises a first step of obtaining 1701, by the mobile device 1100, a transition area reconfiguration, TAR, information 1101. The method comprises a second step of adjusting 1702, by the mobile device 1100, a transition area configuration 1102 of the mobile device 1100 according to the TAR information 1101.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method (1500) performed by a network device (100) for sidelink communication, the method (1500) comprising the steps of:
- obtaining (1501), by the network device (100), a transition area reconfiguration demand, TARD, information (101), wherein the TARD information (101) indicates that reconfiguration of resources or parameters relating to a transition area is required in case of a base station failure in the transition area, wherein the transition area is comprised between a first single operator area of a first operator and a second single operator area of a second operator, wherein spectrum resources available in each of the first single operator area and the second single operator area comprise six separate spectrum chunks A, B, C, D, E and F, and wherein the transition area comprises three parts:
- a first part in which the first operator schedules the spectrum chunks A and B,
- a second part in which the first operator schedules the spectrum chunk C and the second operator schedules the spectrum chunk D, and
- a third part in which the second operator schedules the spectrum chunks E and F,
wherein the second part is comprised between the first part and the third part; and
- providing (1502), by the network device (100) to a base station or to a user equipment, a transition area reconfiguration, TAR, information (102) based on the TARD information (101), wherein the TAR information (102) comprises spectrum reconfiguration information.

2. The method (1500) according to claim 1, wherein the network device (100) is implemented by means of an Access and Mobility Management function, AMF; a Management server; or an Application Function, AF, or Vehicle to Anything, V2X, control server.

3. The method (1500) according to claim 1 or 2, further comprising:
providing, by the network device (100), the TAR information (102) by means of a broadcast message; radio control signaling; application layer information; and/or non-access stratum signaling.

4. The method (1500) according to any one of the preceding claims, further comprising:
determining, by the network device (100), a demand for reconfiguration of a transition area, and to obtain the TARD information (101) based on the demand.

5. The method (1500) according to any one of the preceding claims, further comprising:
- providing, by the network device (100), a TAR request (201), based on the TARD information (101),
- obtaining, by the network device (100), a TAR response (202), according to the TAR request (201), and
- providing, by the network device (100), the TAR information (102) (102) based on the TAR response (202).

6. The method (1500) according to any one of the claims 4 or 5, wherein the TAR request (201) is based on and/or comprises at least one of:
- packet error rate;
- channel busy rate, CBR;
- base station, BS, failure indication;
- latency;
- bit error rate;
- data rate.

7. The method (1500) according to any of claims 4 to 6, wherein the TAR request (201) includes a reconfiguration parameter.

8. The method (1500) according to any of claims 4 to 7, further comprising:
- obtaining, by a second network device (300), the TAR request (401);
- determining, by the second network device (300), the TAR response (402) based on the TAR request (401); and
- providing, by the second network device (300), the TAR response (402), to the network device (100).

9. The method (1500) according to claim 8, wherein the TAR request (401) is based on and/or comprises at least one of a packet error rate; a channel busy rate, CBR; a base station, BS, failure indication; a latency; a bit error rate; or a data rate; and wherein the method (1500) further comprises determining, by the second network device (300), the TAR response (402) based on at least one of the packet error rate; the channel busy rate, CBR; the base station, BS, failure indication; the latency; the bit error rate; or the data rate.

10. The method (1500) according to claim 8 or 9, wherein the TAR request (401) includes a reconfiguration parameter, and wherein the method further comprises determining, by the second network device (300), the TAR response (402) based on the reconfiguration parameter.

11. The method (1500) according to any of claims 1 to 10, further comprising:
- obtaining, by a mobile device (1100) the TAR information (1101);
- adjusting, by the mobile device (1100), a transition area configuration (1102) of the mobile device (1100) according to the TAR information (1101).

12. The method (1500) according to claim 11, further comprising obtaining, by the mobile device (1100), the TAR information (1101) by means of a broadcast message; radio control signaling; application layer information; and/or non-access stratum signaling.

## Patentansprüche

1. Verfahren (1500), das durch eine Netzwerkvorrichtung (100) für Sidelink-Kommunikation durchgeführt wird, wobei das Verfahren (1500) die Schritte umfasst:
- Erlangen (1501), durch die Netzwerkvorrichtung (100), von Informationen (101) mit Anforderung für eine Rekonfigurierung eines Übergangsbereichs (TARD), wobei die TARD-Informationen (101) angeben, dass eine Rekonfigurierung von Ressourcen oder Parametern bezüglich eines Übergangsbereichs im Fall eines Basisstationsausfalls in dem Übergangsbereich erforderlich ist, wobei der Übergangsbereich zwischen einem ersten Einzelbetreiberbereich eines ersten Betreibers und einem zweiten Einzelbetreiberbereich eines zweiten Betreibers umfasst ist, wobei Spektrumressourcen, die in jedem des ersten Einzelbetreiberbereichs und des zweiten Einzelbetreiberbereichs verfügbar sind, sechs separate Spektrumblöcke A, B, C, D, E und F umfassen, und wobei der Übergangsbereich drei Teile umfasst:
- einen ersten Teil, in dem der erste Betreiber die Spektrumblöcke A und B plant,
- einen zweiten Teil, in dem der erste Betreiber den Spektrumblock C einteilt und der zweite Betreiber den Spektrumblock D plant, und
- einen dritten Teil, in dem der zweite Betreiber die Spektrumblöcke E und F plant, wobei der zweite Teil zwischen dem ersten Teil und dem dritten Teil umfasst ist; und
- Bereitstellen (1502), durch die Netzwerkvorrichtung (100) an eine Basisstation oder an eine Benutzereinrichtung, von Informationen (102) für die Rekonfigurierung eines Übergangsbereichs (TAR) basierend auf den TARD-Informationen (101), wobei die TAR-Informationen (102) Informationen für die Spektrum-Rekonfigurierung umfassen.

2. Verfahren (1500) nach Anspruch 1, wobei die Netzwerkvorrichtung (100) mittels einer Zugangs- und Mobilitätsmanagementfunktion (AMF); eines Verwaltungsservers; oder einer Anwendungsfunktion (AF) oder eines Vehicle-to-Anything(V2X)-Steuerungsservers implementiert ist.

3. Verfahren (1500) nach Anspruch 1 oder 2, das ferner umfasst:
Bereitstellen, durch die Netzwerkvorrichtung (100), der TAR-Informationen (102) mittels einer Broadcast-Nachricht; Funksteuerungssignalisierung;
Anwendungsschichtinformation; und/oder Non-Access-Stratum-Signalisierung.

4. Verfahren (1500) nach einem der vorstehenden Ansprüche, das ferner umfasst: Bestimmen, durch die Netzwerkvorrichtung (100), einer Anforderung für die Rekonfigurierung eines Übergangsbereichs, und um die TARD-Informationen (101) basierend auf der Anforderung zu erlangen.

5. Verfahren (1500) nach einem der vorstehenden Ansprüche, das ferner umfasst:
- Bereitstellen, durch die Netzwerkvorrichtung (100), einer TAR-Anfrage (201) basierend auf den TARD-Informationen (101),
- Erlangen, durch die Netzwerkvorrichtung (100), einer TAR-Antwort (202) gemäß der TAR-Anfrage (201), und
- Bereitstellen, durch die Netzwerkvorrichtung (100), der TAR-Informationen (102) (102) basierend auf der TAR-Antwort (202).

6. Verfahren (1500) nach einem der Ansprüche 4 oder 5, wobei die TAR-Anfrage (201) auf mindestens einem basiert und/oder mindestens eines umfasst von:
- Paketfehlerrate;
- Kanalbelegungsrate (CBR);
- Basisstations(BS)-Ausfallangabe;
- Latenz;
- Bitfehlerrate;
- Datenrate.

7. Verfahren (1500) nach einem der Ansprüche 4 bis 6, wobei die TAR-Anfrage (201) einen Rekonfigurierungsparameter einschließt.

8. Verfahren (1500) nach einem der Ansprüche 4 bis 7, das ferner umfasst:
- Erlangen, durch eine zweite Netzwerkvorrichtung (300), der TAR-Anfrage (401);
- Bestimmen, durch die zweite Netzwerkvorrichtung (300), der TAR-Antwort (402) basierend auf der TAR-Anfrage (401); und
- Bereitstellen, durch die zweite Netzwerkvorrichtung (300), der TAR-Antwort (402) an die Netzwerkvorrichtung (100).

9. Verfahren (1500) nach Anspruch 8, wobei die TAR-Anfrage (401) auf mindestens einem basiert und/oder mindestens eines umfasst von einer Paketfehlerrate; einer Kanalbelegungsrate (CBR); einer Basisstations(BS)-Ausfallangabe; einer Latenz; einer Bitfehlerrate; oder einer Datenrate; und wobei das Verfahren (1500) ferner das Bestimmen, durch die zweite Netzwerkvorrichtung (300), der TAR-Antwort (402) basierend auf mindestens einem umfasst von der Paketfehlerrate; der Kanalbelegungsrate (CBR); der Basisstations(BS)-Ausfallangabe; der Latenz; der Bitfehlerrate; oder der Datenrate.

10. Verfahren (1500) nach Anspruch 8 oder 9, wobei die TAR-Anfrage (401) einen Rekonfigurierungsparameter einschließt, und wobei das Verfahren ferner das Bestimmen, durch die zweite Netzwerkvorrichtung (300), der TAR-Antwort (402) basierend auf dem Rekonfigurierungsparameter umfasst.

11. Verfahren (1500) nach einem der Ansprüche 1 bis 10, das ferner umfasst:
- Erlangen, durch eine Mobilvorrichtung (1100), der TAR-Informationen (1101);
- Anpassen, durch die Mobilvorrichtung (1100), einer Übergangsbereichskonfiguration (1102) der Mobilvorrichtung (1100) gemäß den TAR-Informationen (1101).

12. Verfahren (1500) nach Anspruch 11, das ferner das Erlangen, durch die Mobilvorrichtung (1100), der TAR-Informationen (1101) mittels einer Broadcast-Nachricht; Funksteuerungssignalisierung; Anwendungsschichtinformation; und/oder Non-Access-Stratum-Signalisierung umfasst.

## Revendications

1. Procédé (1500) réalisé par un dispositif de réseau (100) pour une communication de liaison latérale, le procédé (1500) comprenant les étapes consistant à :
- obtenir (1501), par le dispositif de réseau (100), des informations de demande de reconfiguration de zone de transition, TARD (101), dans lequel les informations de TARD (101) indiquent qu'une reconfiguration de ressources ou de paramètres relatifs à une zone de transition est requise en cas de défaillance de station de base dans la zone de transition, dans lequel la zone de transition est comprise entre une première zone à opérateur unique d'un premier opérateur et une seconde zone à opérateur unique d'un second opérateur, dans lequel des ressources spectrales disponibles dans chacune de la première zone à opérateur unique et de la seconde zone à opérateur unique comprennent six segments de spectre distincts A, B, C, D, E et F, et dans lequel la zone de transition comprend trois parties :
- une première partie dans laquelle le premier opérateur planifie les segments de spectre A et B,
- une deuxième partie dans laquelle le premier opérateur programme le segment de spectre C et le second opérateur programme le segment de spectre D, et
- une troisième partie dans laquelle le second opérateur planifie les segments de spectre E et F, dans lequel la deuxième partie est comprise entre la première partie et la troisième partie ; et
- fournir (1502), par le dispositif de réseau (100) à une station de base ou à un équipement utilisateur, des informations de reconfiguration de zone de transition, TAR (102) sur la base des informations de TARD (101), dans lequel les informations de TAR (102) comprennent des informations de reconfiguration de spectre.

2. Procédé (1500) selon la revendication 1, dans lequel le dispositif de réseau (100) est mis en œuvre au moyen d'une fonction de gestion d'accès et de mobilité, AMF ; un serveur de gestion ; ou un serveur de commande de fonction d'application, AF, ou de véhicule à tout, V2X.

3. Procédé (1500) selon la revendication 1 ou 2, comprenant en outre :
la fourniture, par le dispositif de réseau (100), des informations de TAR (102) au moyen d'un message de diffusion ; d'une signalisation de radiocommande ; d'informations de couche d'application ; et/ou d'une signalisation de strate de non-accès.

4. Procédé (1500) selon l'une quelconque des revendications précédentes, comprenant en outre :
la détermination, par le dispositif de réseau (100), d'une demande de reconfiguration d'une zone de transition, et pour obtenir les informations de TARD (101) sur la base de la demande.

5. Procédé (1500) selon l'une quelconque des revendications précédentes, comprenant en outre :
- la fourniture, par le dispositif de réseau (100), d'une requête de TAR (201), sur la base des informations de TARD (101),
- l'obtention, par le dispositif de réseau (100), d'une réponse de TAR (202), selon la requête de TAR (201), et
- la fourniture, par le dispositif de réseau (100), des informations de TAR (102) (102) sur la base de la réponse de TAR (202).

6. Procédé (1500) selon l'une quelconque des revendications 4 ou 5, dans lequel la requête de TAR (201) est basée sur et/ou comprend au moins l'un parmi :
- un taux d'erreur de paquets ;
- un taux d'occupation de canal, CBR ;
- une indication de défaillance de station de base, BS ;
- une latence ;
- un taux d'erreur de bits ;
- un débit de données.

7. Procédé (1500) selon l'une quelconque des revendications 4 à 6, dans lequel la requête de TAR (201) comporte un paramètre de reconfiguration.

8. Procédé (1500) selon l'une quelconque des revendications 4 à 7, comprenant en outre :
- l'obtention, par un second dispositif de réseau (300), de la requête de TAR (401) ;
- la détermination, par le second dispositif de réseau (300), de la réponse de TAR (402) sur la base de la requête de TAR (401) ; et
- la fourniture, par le second dispositif de réseau (300), de la réponse de TAR (402) au dispositif de réseau (100).

9. Procédé (1500) selon la revendication 8, dans lequel la requête de TAR (401) est basée sur et/ou comprend au moins un taux d'erreur de paquet ; un taux d'occupation de canal, CBR ; une indication de défaillance de station de base, BS ; une latence ; un taux d'erreur de bits ; ou un débit de données ; et dans lequel le procédé (1500) comprend en outre la détermination, par le second dispositif de réseau (300), de la réponse de TAR (402) sur la base d'au moins l'un parmi le taux d'erreur de paquet ; le taux d'occupation de canal, CBR ; l'indication de défaillance de station de base, BS ; la latence ; le taux d'erreur de bits ; ou le débit de données.

10. Procédé (1500) selon la revendication 8 ou 9, dans lequel la requête de TAR (401) comporte un paramètre de reconfiguration, et dans lequel le procédé comprend en outre la détermination, par le second dispositif de réseau (300), de la réponse de TAR (402) sur la base du paramètre de reconfiguration.

11. Procédé (1500) selon l'une quelconque des revendications 1 à 10, comprenant en outre :
- l'obtention, par un dispositif mobile (1100), des informations de TAR (1101) ;
- l'ajustement, par le dispositif mobile (1100), d'une configuration de zone de transition (1102) du dispositif mobile (1100) selon les informations de TAR (1101).

12. Procédé (1500) selon la revendication 11, comprenant en outre l'obtention, par le dispositif mobile (1100), des informations de TAR (1101) au moyen d'un message de diffusion ; d'une signalisation de radiocommande ; d'informations de couche d'application ; et/ou d'une signalisation de strate de non-accès.
